# EUROPEAN PATENT APPLICATION

(11) **EP 0 653 568 A2**
(43) Date of publication of application: **17.05.1995**
(21) Application number: 94850179.6
(22) Date of filing: 07.10.1994
(51) Int. Cl.: F16B 2/14, F16B 7/04

(54) **Wedge clamping member**

(30) Priority: 05.11.1993 SE 9303654
(71) Applicant: THORSMAN & CO AB, S-611 29 Nyköping (SE)
(72) Inventor: Larsson, Ulf, S-611 50 Nyköping (SE); Östman, Tommy, S-611 22 Nyköping (SE)
(74) Representative: Wärulf, Olov

(57) **Abstract**

Wedge clamping member for the assembling of a first detail (5) and a second detail (6) to each other, at least one of the details (6) showing a T-slot (6.1) with flanges (6.2) running along a contact surface. The member comprises a primary wedge (1) showing a primary wedge surface (1.2) and a secondary wedge (2) showing a corresponding secondary wedge surface (2.2). The primary wedge (1) and the secondary wedge (2) are kept together for contact between the wedge surfaces (1.2, 2.2) by means of a screw (3). At least one of the wedges (1, 2) preferably the second wegde (2) can be caused to exert forces against the flanges (6.2) in tightening the screw (3), thereby jamming the members (5, 6) together. One of the wedges (1, 2) can be fixedly connected with one of the details (5, 6).

## Description

### TECHNICAL FIELD

The present invention relates to a clamping member for clamping two details to each other, at least one of the details showing a T-slot with flanges extending along a contact surface and possibly even the second detail showing a T-slot with corresponding flanges extending along a corresponding contact surface. The clamping member is intended for clamping the details together along the contact surfaces, the T-slots adjacent to each other.

### BACKGROUNG TECHNICS

On clamping of details onto surfaces showing T-slots, e. g. vertical columns of extruded aluminium with T-slots extending along the lengths of the column, it is known to arrange a washer which runs in the T-slot and which is connected to the detail to be clamped via a screw which is driven into a threaded hole in the washer referred to. On clamping the detail in question the screw is tightened in order to urge the washer towards the inner side of the flanges of the T-slot and to keep the detail by friction onto the surfaces being in contact with each other. In order to be able to tighten the screw in the fastening washer the detail to be clamped e.g. to a column has to be shaped for the screw to be accessible in a direction perpendicular to the T-slot, i.e. towards the contact surface of the column for the part in question, which means that the detail has to be provided with flanges, notches and the like where the screw head is accessible.

Hitherto known fastening washers have the drawback that it is not always possible to arrange details adjacent to each other along one and the same T-slot without interfering in the construction of the detail which partly increases the price of the detail in question and partly makes it aestethically less attractive.

### DESCRIPTION OF THE INVENTION

The object of the present invention is to achieve a clamping member according to the preamble, and which does not show the disadvantages associated with the hitherto known fastening washers. The object is achieved with a wedge clamping member for clamping a first detail and a second detail to each other, at least one of the details showing a first T-slot with flanges extending along a contact surface and the second detail showing a second T-slot with flanges extending along a corresponding contact surface.

The invention is characterized in that the wedge clamping member comprises a primary wedge showing a primary wedge surface and a secondary wedge showing a corresponding second wedge surface, that the primary wedge and the secondary wedge are kept together for contact between the wedge surfaces by a screw and possibly form an elongated member and that at least one of the wedges, preferably the secondary wedge, can be caused to exert forces directed towards the flanges on tightening the screw, whereby they are pressed together. One of the wedges, preferably the primary wedge, can be firmly connected with one of the details, preferably the first member.

The terms primary wedge and secondary wedge are not meant to limit the invention to the form described subsequently in connection with the drawings but can relate to all kinds of wedge-type members. The wedge clamping member according to the invention is not limited to relate to an elongated rightangled prism as described in connection with the drawings but can show different exterior shapes which however have in common that the members show external tracks in which the flanges of the T-slot are meant to run on clamping parts.

The screw mentioned above which keeps the details of the wedge clamping member together can be driven directly into one of the parts of the member as well as it can be equipped with a screw nut preferably arranged at the end of the member. It is however preferable that one part of the wedge clamping member shows a threaded hole which extends at least some way in from the end of the part of the member. It also lies within the scope of the invention to perform the screw as a rigging screw showing both left-handed threads and right-handed threads, both parts of the wedge clamping member showing either threaded holes or screw nuts preferably at the gables. It lies within the scope of the invention to let the wedge clamping member consist of three or more parts, showing mutual parallel wedge surfaces or wedge surfaces leaning towards each other.

Further features and characteristics concerning the wedge clamping member according to the invention are evident from the description of the drawings subsequently and from the patent claims.

### DESCRIPTION TO DRAWINGS

The invention is described subsequently as an example of an embodiment in connection with the enclosed drawings.

Fig. 1 shows a side-view of an assembled wedge clamping member according to the invention.

Fig. 2 shows a longitudinal section of the wedge clamping member according to fig. 1.

Fig. 3 shows a detached view of the left part of the wedge clamping member according to fig. 1, seen in the direction of its wedge-shaped surface.

Fig. 4 shows a detached view of the right part of the wedge clamping member according to fig. 1, seen in the direction of its wedge-shaped surface.

Figs. 5 and 6 show as an example the assembly of a media distributor on a vertcal column by means of a wedge clamping member according to the invention, partly as a longitudinal section through the distributor and the column.

Figs. 7 and 8 show an alternativ embodiment of the wedge clamping member as an assembly like the one in figs. 5 and 6.

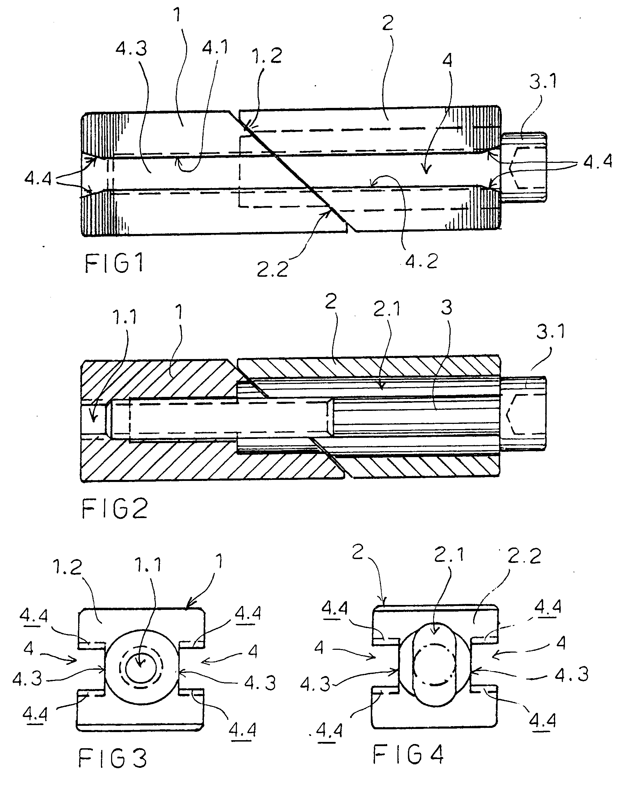

The wedge clamping member shown in the figures comprises a primary wedge 1 which is connected with a secondary wedge 2 via a screw 3, which is driven into a threaded hole 1.1 in the primary wedge 1 and which runs freely in a oval-shaped hole 2.1 in the secondary wedge. The primary wedge 1 shows a primary wedge surface 1.2, which inclines towards the longitudinal direction of the screw 3 and the wedge clamping member and which is equivalent to a secondary wedge surface 2.2 on the secondary wedge 2 with the same angle of inclination so that the primary wedge 1 together with the secondary wedge 2 in their outline form a rectangular prism. The wedge surfaces 1.2, 2.2 cut two opposite and mutually parallel long sides of the assembled wedge clamping member beneath right angles. The screw 3 is provided with a head 3.1, the exterior diameter of which is larger than the width of the oval-shaped hole 2.1, whereby the screw 3 causes the secondary wedge 2 to slide along its secondary wedge surface 2.2 and at the same time to get slided perpendiculary to the longitudinal direction of the member when it is driven into the threaded hole 1.1 in the primary wedge 1. The sliding between the wedge surfaces 1.2, 2.2 is limited by the extension length in one plane of the oval-shaped hole, which is parallel with the planes through the opposite, parallel long sides of the wedge clamping member. Fig. 4 shows in a dash dotted line the cross-section of the screw 3 and the slits in the oval-shaped hole 2.1 allowing the sliding between the wedge surfaces 1.2, 2.2.

Both the primary wedge 1 and the secondary wedge 2 show a slot 4 in each of the two opposite and mutually parallel long sides, which cut the wedge surfaces 1.2, 2.2 beneath right angles, which extends centrally in each long side along the length of the wedge clamping member. These slots are intended to be connected with corresponding flanges of the T-slots in parts to be clamped to each other via contact surfaces 4.1, 4.2, which are facing each other and separated by a bottom surface 4.3 in each slot 4. Each of the slots 4 show bevellings 4.4 on its ends in order to facilitate the application of the wedge clamping member on the flanges of the T-slot.

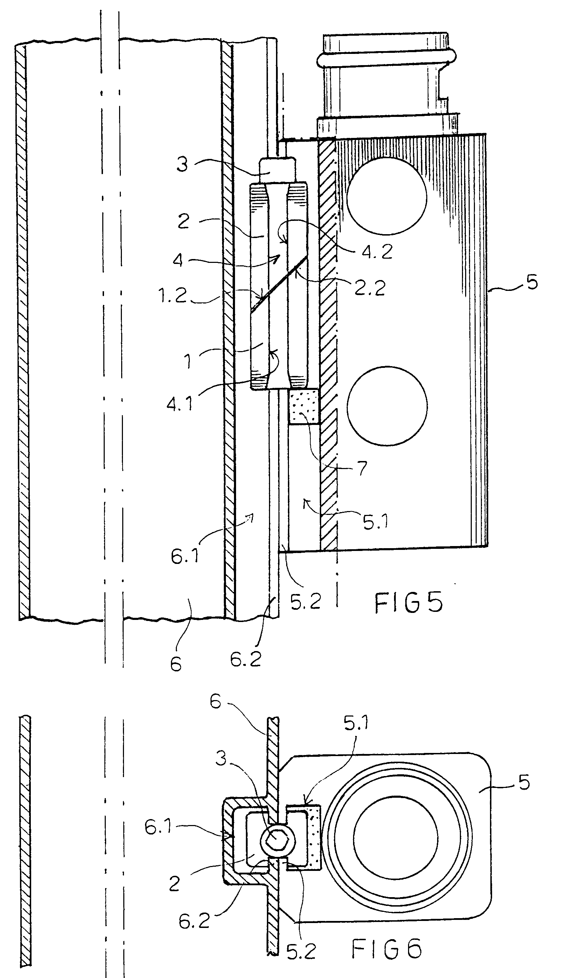

In the assembling shown in figs. 5 and 6 a distributor 5 for media is attached to a vertical column 6, which is fragmentarily shown in the figures, by means of a wedge clamping member according to the invention. The distributor 5 shows a T-slot 5.1, which is arranged in contact with a mainly equal T-slot 6.1 on the column 6. Both flanges 5.2, 6.2 of the T-slot are arranged in contact with each other and are kept together by the wedge clamping member being passed down over the flanges 5.2, 6.2 so that they run in the slots 4 on the wedge clamping member. The secondary wedge 2 has been caused to slide along the wedge surfaces 1.2, 2.2 by tightening of the screw 3 in the longitudinal direction of the wedge clamping member. By this means the secondary wedge 2 is brought to exert a force directed towards the flanges 5.2 of the T-slot 5.1 on the distributor 5 and the primary wedge 1 is brought to exert a counteracting force towards the flanges 6.2 on the column 6 via the occuring contact surfaces 4.1, 4.2 at the slots 4 in the wedge clamping member. The distributor 5 is thereby jammed against the column 6 and is kept there by means of the friction between them. In the shown assembling example the screw 3 in the wedge clamping member is accessible for tightening by means of a spanner which is inserted from above into the screw 3 in fig 5. By that means yet another distributor for media can be connected with an already assembled distributor 5 and get clamped with yet another wedge clamping member according to the invention.

In order to keep the wedge clamping member in a desired position during the assembling of the distributor 5 on the column 6 a stop member 7, e.g. in the shape of a rubber cushion or another springy member, is placed in the T-slot 5.1 on the distributor 5 in order to prevent the wedge clamping member to slide downwards/into the T-slot 5.1 during the tightening of the screw 3 in the member. Such a stop member 7 can even be arranged on the upper side of the wedge clamping member in the T-slot 5.1. The stop member 7 can even be a part of the wedge clamping member or of a member such as a stop lug, which is tightened in the T-slot 5.1, but it can even be a screw head, which sticks up from the bottom of the T-slot 5.1.

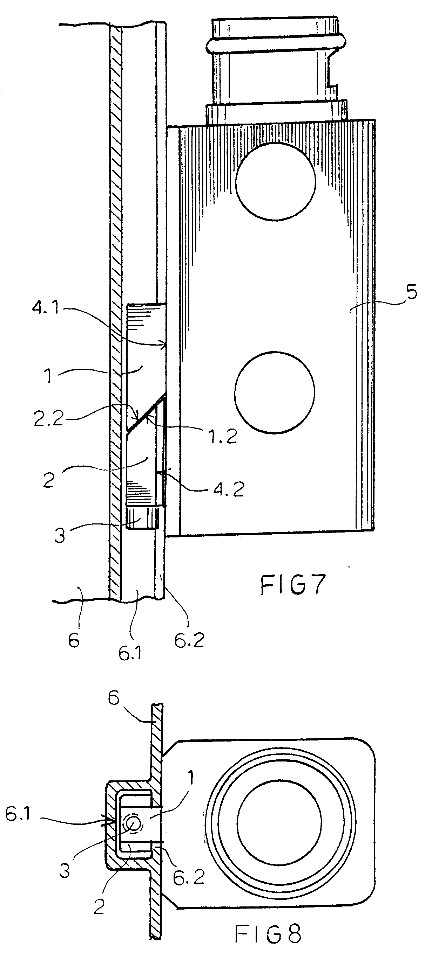

In the assembling shown in figures 7 and 8 a distributor 5 for media is attached to a vertical column 6, which is fragmentarily shown in the figures, by means of a wedge clamping member according to the invention in an alternativ embodiment. A primary wedge 1 is fixedly connected with the distributor 5, which is arranged in contact to a T-slot 6.1 on the column 6. The primary wedge 1 shows a rectangular cross-section and extends into the T-slot 6.1 in the shape of a fin. The secondary wedge 2 has been brought to slide along the wedge surfaces 1.2, 2.2 by means of tightening the screw 3 in the longitudinal direction of the wedge clamping member. By this means the secondary wedge 2 is brought to exert a force directed towards the flange 6.2 on the column 6 via the occuring contact surfaces on the side of the secondary wedge 2, which is directed towards the distributor. Thereby the distributor 5 is jammed against the column 6 and is kept there by means of the friction between them. In the shown assembling example the screw 3 in the wedge clamping member is accessible for tightening by means of a spanner which is inserted from below into the screw 3 on fig. 7. By that means yet another distributor for media can be connected with an already assembled distributor 5 and get clamped with yet another wedge clamping member according to the invention.

## Claims

1. Wedge clamping member for the assembling of a first detail (5) and a second detail (6) to each other, at least one of the details (6) showing a T-slot (6.1) with flanges (6.2), which runs along the detail (6), **characterized** in that the member comprises a primary wedge (1) showing a primary wedge surface (1.2) and a secondary wedge (2) showing a corresponding secondary wedge surface (2.2), that the primary wedge (1) shows a first contact surface (4.1) towards the second detail (6) and the secondary wedge (2) showing a second contact surface (4.2) towards the first detail (1), that the first contact surface (4.1) is directed towards the second contact surface (4.2), that the primary wedge (1) and the secondary wedge (2) are kept together for contact between the wedge surfaces (1.2, 2.2) by a screw (3), which extends in the longitudinal direction of the wedge clamping member, parallel to the contact surfaces (4.1, 4.2) towards the details (5, 6), thereby causing the primary wedge (1) and the secondary wedge (2) via the contact surfaces (4.1, 4.2) to exert forces directed against each other onto the flanges (6.2) by tightening the screw (3) so that the details (5, 6) are fixedly clamped against the flanges (6.2).

2. Member according to claim 1, **characterized** in that one of the wedges (1, 2), preferably the primary wedge (1), is fixedly connected with one of the details (5, 6), preferably the first detail (5).

3. Member according to claim 1, the first detail (5) showing a first T-slot (5.1) with flanges (5.2) which runs along the second contact surface (4.2) and the second detail (6), showing a second T-slot (6.1) with flanges (6.2) which runs along the first contact surface (4.1), **characterized** in that the primary wedge (1) and the secondary wedge (2) are kept together to a separate unit by the screw (3) and form a separate elongated member and that the member comprises a slot (4) in each of two opposite sides, showing the contact surfaces directed against each other (4.1, 4.2), seperated by a bottom surface (4.3) in which the flanges (5.2, 6.2) of the T-slots (5.1, 6.1) are intended to run during the application of the member to the details (5, 6) to be assembled.

4. Member according to any of the claims 1-3, **characterized** in that the screw (3) is driven into a threaded hole (1.1) in the primary wedge (1) and runs freely in a hole (2.1) in the secondary wedge (2).

5. Member according to claim 4, **characterized** in that the screw (3) runs freely in a hole with a rectangular cross-section, preferably one mainly oval hole (2.1), the longitudinal axis of which extends in a plane parallel to the plane through the opposite sides with the slots (4) for the flanges of the T-slot (5.2, 6.2).

6. Member according to any of the claims 1-5. **characterized** in that at least one stop member (7) is arranged on or in connection with the member being applicated to at least one T-slot (5.1) on one of the details (5) to be assembled.

7. Member according to claim 6, **characterized** in that the stop member (7) is a springy member which is sliding along the T-slot (5.1).
